Europäisches Patentamt

European Patent Office

Office européen des brevets

(11) Veröffentlichungsnummer: **0 027 924**
**B1**

(12) **EUROPÄISCHE PATENTSCHRIFT**

(45) Veröffentlichungstag der Patentschrift:
**18.05.83**

(21) Anmeldenummer: **80106005.4**

(22) Anmeldetag: **03.10.80**

(51) Int. Cl.³: **A 01 D 43/12,** A 01 B 49/04

(54) Anbaugerätekombination für landwirtschaftliche Traktoren.

(30) Priorität: **24.10.79 DE 2943005**

(43) Veröffentlichungstag der Anmeldung:
**06.05.81 Patentblatt 81/18**

(45) Bekanntmachung des Hinweises auf die Patenterteilung:
**18.05.83 Patentblatt 83/20**

(84) Benannte Vertragsstaaten:
**AT CH FR GB LI**

(56) Entgegenhaltungen:

**DE-A-2 438 345**
**DE-A-2 755 676**
**FR-A-2 272 586**
**US-A-3 608 642**
**US-A-3 830 311**

(73) Patentinhaber: **Weichel, Ernst, Bahnhofstrasse 1,
D-7326 Heiningen (DE)**

(72) Erfinder: **Weichel, Ernst, Bahnhofstrasse 1,
D-7326 Heiningen (DE)**

## Anbaugerätekombination für landwirtschaftliche Traktoren

Die Erfindung betrifft eine Vorrichtung für landwirtschaftliche Traktoren zum Lockern von vorzugsweise mit lebenden oder abgestorbenen Pflanzen- bzw. Ernterückständen bedeckten Ackerböden, mit einem unter einer Abdeckhaube angeordneten motorisch angetriebenen Schlegelmäher, wenigstens einer Reihe hinter demselben angeordneten Lockerungskörpern und hinter diesen umlaufenden, motorisch antreibbaren Werkzeugen zur Krümelung des gelockerten Erdbodens, bei welcher die Abdeckhaube des Schlegelmähers entweder vor der Vorderseite des Tragrohres der Lockerungskörper schräg nach hinten unten gerichtet endet oder über die Lockerungskörper und die dahinter angeordneten rotierenden Werkzeuge zur Krümelung des Bodens hinwegreicht, wobei der Schlegelmäher an einem Tragrahmen angebracht ist, der aus wenigstens einem quer zur Fahrtrichtung verlaufenden Querträger und aus wenigstens zwei in Fahrtrichtung verlaufenden Längsträgern besteht.

Dieses, aus der deutschen Offenlegungsschrift 2 755 676 bekannte, Arbeitsgerät hat den Nachteil, dass die Lockerungsorgane an einem hinter den Schlegelmessern des Schlegelmähers angeordneten Querträger befestigt sind, und daher jeweils stets nur zusammen mit dem Schlegelmäher, nicht aber auch separat für sich allein oder in Kombination mit einem hinter den Lockerungskörpern angeordneten Gerät zur Krümelung des Ackerbodens und/oder einem Drillgerät verwendbar sind.

Diese Arbeitsmöglichkeit ist aber für den Praktiker deshalb sehr wichtig, weil die Bodenlockerung überwiegend auf solchen Feldern vorgenommen werden muss, die nicht mit lebenden oder abgestorbenen Pflanzen bedeckt sind.

Ein weiterer Nachteil der bekannten Kombination besteht darin, dass die Anordnung eines konzentrisch zur Umlaufbahn der Schlegelmesser verschiebbaren Teiles der Wand des Auswurfkanales in der Praxis aus Raumgründen nur mit unverhältnismässig grossem Bauaufwand realisierbar ist, und ausserdem die Verstellung eines derartigen Wandteiles deshalb in der Praxis schwierig ist, weil die dafür erforderlichen Führungsleisten im praktischen Betrieb zu sehr verschmutzen.

Der Erfindung liegt die Aufgabe zugrunde, diese Nachteile, die der bekannten Kombination noch anhaften, zu beseitigen. Diese Aufgabe wird bei der eingangs angegebenen Vorrichtung erfindungsgemäss dadurch gelöst, dass der Tragrahmen nach hinten offen ist, die Längsträger an deren freien Enden je ein Kupplungsstück tragen, die mit einem am Tragrohr der Lockerungskörper angeklemmten Gegenstück leicht lösbar verbunden sind und die Lockerungskörper am Tragrohr befestigt sind.

Weitere Besonderheiten der Lösung dieser Aufgabe ergeben sich aus den kennzeichnenden Teilen der Unteransprüche.

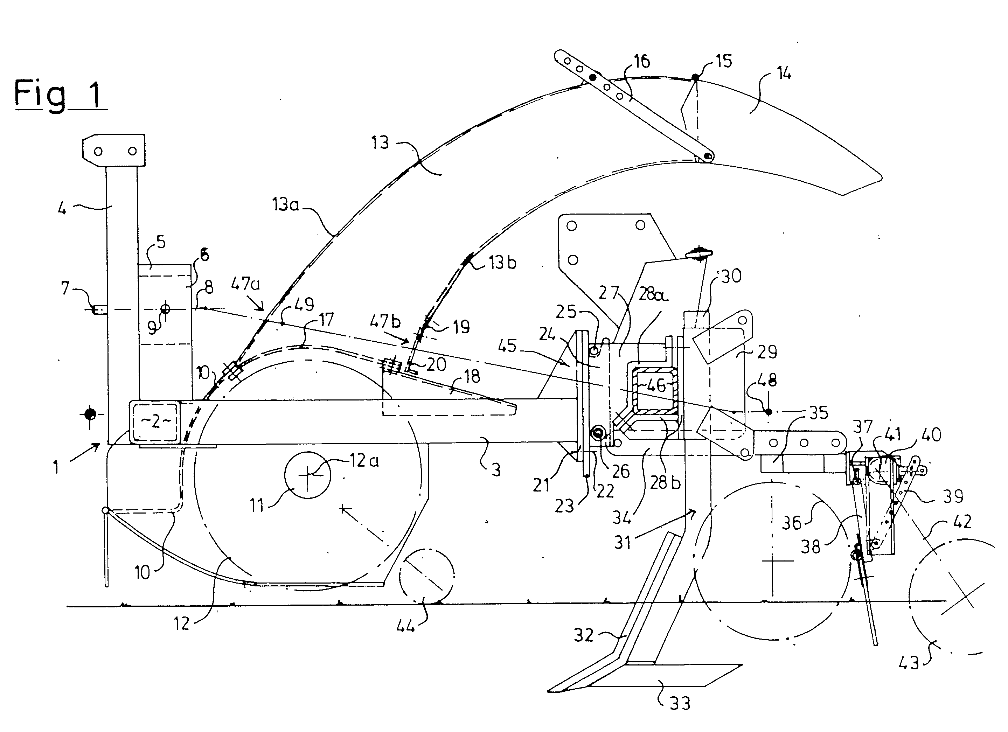

In folgendem wird die Erfindung anhand der Figuren 1 bis 4 näher erläutert:

Wie Fig. 1 zeigt, besteht die Gerätekombination aus einem Tragrahmen 1, der einen Querträger 2 aufweist, an dessen äusseren Enden Längsträger 3 angeordnet sind, die nach hinten gerichtet verlaufen. In der Mitte des Querträgers 2 ist ein Anbaubock 4 angeordnet, der durch Ständer 5 mit dem Querträger 2 zusätzlich verbunden ist, zwischen denen ein Getriebe 6 angebracht ist, das eine vordere Eingangswelle 7, eine hintere Abtriebswelle 8 und eine seitliche Abtriebswelle 9 aufweist. Diese treibt in an sich bekannter, nicht näher dargestellten Weise über ein Zwischenlager und ein Keilriemenvorgelege die in dem Lager 11 gelagerte Schlegelwelle 12a des Schlegelmähers 12 an.

Die hintere Abtriebswelle 8 ist über eine schematisch dargestellte Gelenkwelle 49 mit der Eingangswelle 48 eines bekannten Getriebes einer bekannten Rotoregge verbunden. Diese Gelenkwelle 49 durchquert zwei in den Wänden 13a und 13b des das Gehäuse 10 nach oben fortsetzenden Auswurfkanales 13 angebrachte Öffnungen 47a und 47b. Am oberen Ende des Auswurfkanales 13 ist eine um ein Scharnier 15 schwenkbare Schwenkklappe 14 angeordnet, die durch eine Verstellstrebe 16 in verschiedenen Auswurfrichtungen feststellbar ist. Dadurch kann die Auswurfrichtung des von dem Schlegelmäher aufgenommenen zerkleinerten und über die Geräte zur Lockerung und Krümelung des Bodens hinweggeworfenen organischen Materials so verändert werden, dass das Material wahlweise weit hinter oder direkt hinter der Rotoregge zu Boden fällt und daher mit geringen Mengen Erde vermengt oder ganz ohne Erdbeimischung abgelegt werden kann.

Falls das organische Material nicht als Bodendecke im wesentlichen auf den gelockerten und gekrümelten Boden aufgebracht, sondern überwiegend in den gelockerten Boden eingemischt werden soll, kann ein Einsatzblech 17 durch eine nach Öffnung einer um ein Scharnier 19 schwenkbaren Klappe 20 zugängig gemachte Öffnung in der Wand 13b eingesetzt und in (nicht in allen Einzelheiten dargestellten) Halterungen befestigt werden, so dass das ausgeworfene Gut durch das Einsatzblech 17 abgelenkt und in eine an den Längsträgern 3 befestigte Ausblashaube 18 geleitet wird. Dadurch kann es zwischen den Haltestielen 30 der Lockerungskörper 31 direkt in den Wirkungsbereich der Zinken der Rotoregge 36 hindurchgeblasen und eine besonders gute und gleichmässige Verteilung und Einmischung des organischen Materials im gelockerten Boden erzielt werden.

Um sowohl den Schlegelmäher 12, als auch das Lockerungsgerät und die Rotoregge auf einfachste Weise auch jeweils separat benützen zu können, sind die freien Enden der Längsträger 3 mit einem Kupplungsflansch 21 versehen, der über nur schematisch dargestellte Schrauben 22 mit einer Gegenplatte 23 starr, aber lösbar verbunden ist, an welcher Rippen 24 angebracht sind, die an Längsplatten 27 angebrachte Bolzen 25 und/oder Stecker 26 aufnehmen. Da die Längsplatten 27 mit Rohrschellen 28a, 28b verbunden sind, die am Tragrohr 46 der Lockerungskörper 31 anklemmbar sind, ist eine einfache Lösung der starren Verbindung der gesamten Gerätekombination gegeben. Am Teil 28b der Rohrschelle befindet sich auch die Haltetasche 29 des Haltestieles 30 der äusseren Lockerungskörper 31, die in an sich bekannter Weise mit Meisseln 32 und Lockerungsscharen 33 versehen sind. In an sich bekannter Weise sind an nicht näher dargestellten Haltevorrichtungen des Tragrohres 46 Lenker 34 angelenkt, die mit dem Rahmen 35 der Rotoregge 36 fest verbunden sind, und die höhenverstellbare Anlenkung des Gerätes am Tragrohr 46 ermöglichen. Die Rotoregge 36 stützt sich auf einer Krümelwalze 43 ab, die über einen Lagerarm 42 mit einem Halterohr 41 in Lagerschalen 40 in an sich bekannter Weise höhenverstellbar am Rahmen der Rotoregge 36 befestigt ist.

Ein zwischen den Zinkenbahnen der Rotoregge 36 und der Krümelwalze 43 angeordnetes Streichblech 38 ist um ein Scharnier 37 schwenkbar am Rahmen 35 befestigt und über eine Verstellstrebe 39 in verschiedenen Winkelstellungen zur Vertikalen einstellbar. In Arbeitsstellung wird der Schlegelmäher 12 durch eine Stützwalze 44 in einstellbarer Höhe am Erdboden geführt.

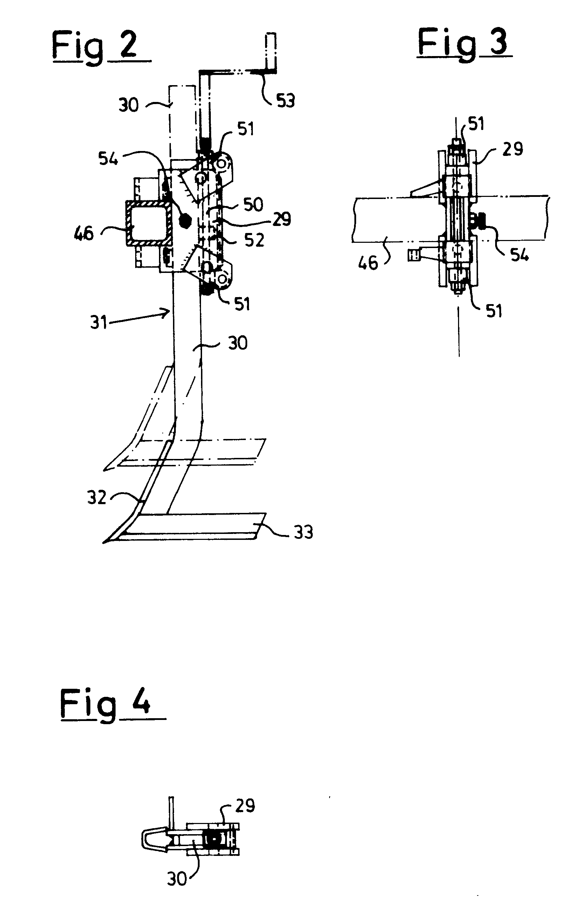

Die Arbeitstiefe der Lockerungsschare 33 der Lockerungskörper 31 ist erfindungsgemäss dadurch einstellbar, dass wie in den Figuren 2 bis 4 dargestellt, der Haltestiel 30 in der Haltetasche 29 verschiebbar gelagert und durch eine Gewindespindel 50, die in Lagerbüchsen 51 drehbar gelagert und in einem am Haltestiel 30 angebrachten Gewindeklotz 52 geführt ist, auf verschiedene Höhenlagen eingestellt wird. Die Betätigung der Gewindespindel erfolgt durch eine abnehmbare Kurbel 53. Die Haltestiele 30 können nach erfolgter Verstellung durch eine Druckschraube 54 fixiert werden. Die Spindel 52 hat in den Lagerbüchsen 51 verhältnismässig viel Spiel, um eine Beanspruchung der Gewindespindel durch in Arbeitsstellung auftretende seitliche Kräfte zu vermeiden.

**Patentansprüche**

1. Vorrichtung für landwirtschaftliche Traktoren zum Lockern von vorzugsweise mit lebenden oder abgestorbenen Pflanzen- bzw. Ernterückständen bedeckten Ackerböden, mit einem unter einer Abdeckhaube angeordneten motorisch angetriebenen Schlegelmäher (12), wenigstens einer Reihe hinter demselben angeordneten Lockerungskörpern (31) und hinter diesen umlaufenden motorisch antreibbaren Werkzeugen zur Krümelung des gelockerten Erdbodens, bei welcher die Abdeckhaube des Schlegelmähers (12) entweder vor der Vorderseite des Tragrohres der Lockerungskörper (31) schräg nach hinten unten gerichtet endet oder über die Lockerungskörper (31) und die dahinter angeordneten rotierenden Werkzeuge zur Krümelung des Bodens hinwegreicht, wobei der Schlegelmäher an einem nach hinten offenen Tragrahmen (1) angeordnet ist, der aus wenigstens einem quer zur Fahrtrichtung verlaufenden Querträger (2) und aus wenigstens zwei in Fahrtrichtung verlaufenden Längsträgern (3) besteht, dadurch gekennzeichnet, dass der Tragrahmen (1) nach hinten offen ist, die Längsträger (3) an ihren freien Enden je ein Kupplungsstück (45) tragen, die mit einem am Tragrohr (46) der Lockerungskörper angeklemmten Gegenstück (23, 27, 28a) leicht lösbar verbunden und die Lockerungskörper (31) am Tragrohr (46) befestigt sind.

2. Vorrichtung nach Anspruch 1, bei welcher der Auswurfkanal (13) aus wenigstens zwei Teilen besteht, dadurch gekennzeichnet, dass der obere Teil des Auswurfkanales eine durch eine Klappe (20) verschliessbare Öffnung (46b) aufweist, durch welche ein Einsatzblech (17) wahlweise einsetzbar ist, das die untere Eintrittsöffnung des Auswurfkanales (13) verschliesst und das von dem Schlegelmäher (12) ausgeworfene Gut durch die Ausblashaube (18) schräg nach hinten unten gerichtet auswirft.

3. Vorrichtung nach einem der Ansprüche 1 und 2, dadurch gekennzeichnet, dass die vordere Wand (13a) des Auswurfkanales (13) eine Öffnung (47a) und die hintere Wand (13b) bzw. die Klappe (20) eine Öffnung (46b) aufweisen, durch welche eine das Getriebe (6) mit der Eingangswelle (48) der Rotoregge (36) verbindende Gelenkwelle (49) verläuft.

4. Vorrichtung nach einem der Ansprüche 1 bis 3, dadurch gekennzeichnet, dass der Haltestiel (30) in der Haltetasche (29) verschiebbar gelagert und durch eine Gewindespindel (50), die in Lagerbüchsen (51) drehbar gelagert und in einem am Haltestiel (30) angebrachten Gewindeklotz (52) geführt ist, auf verschiedene Höhenlagen einstellbar ist.

5. Vorrichtung nach einem der Ansprüche 1 bis 4, dadurch gekennzeichnet, dass der Kupplungsflansch (21) über Schrauben (22) mit einer Gegenplatte (23) starr, aber lösbar verbunden ist, an welcher Rippen (24) angebracht sind, die an Längsplatten (27) angebrachte Bolzen (25) und/oder Stecker (26) aufnehmen und dass die Längsplatten (27) mit Rohrschellen (28a, 28b) verbunden sind, die am Tragrohr (46) der Lockerungskörper (31) anklemmbar sind.

6. Vorrichtung nach einem der Ansprüche 1 bis 5, dadurch gekennzeichnet, dass am festen Rohrschellenteil (28b) wenigstens eine Haltetasche (29) des Haltestiels (30) der äusseren Lockerungskörper (31) angebracht ist.

**Claims**

1. An appliance for agricultural tractors for loosening-up arable land especially when covered with living or dead vegetable matter or crop residues, having a power driven flail mower (12) located beneath a hood, with at least one line of loosening elements (31) located behind it and with rotating power-driven tines behind these for crumbling the loosened soil, in which the hood of the flail mower (12) is either directed at a slope downwards to end ahead of the front of the tubular support of the loosening elements (31) or passes over the loosening elements (31) to reach the rotating tines for crumbling the soil that are to the rear of them, with the flail mower being carried in an open supporting frame (1) that is open to the rear and that comprises at least one cross member (2) at right angles to the direction of travel and of at least two lengthwise members (3) that run in the direction of travel, characterized by the supporting frame (1) being open at the rear, by each of the lengthwise members (3) being fitted at its free end with a connecting element (45) and by these connecting elements being connected in such a manner as to be readily releasable with counter elements (23, 27, 28a) that are clamped to the tubular support (46) and by the loosening elements (31) being secured to the tubular support (46).

2. An appliance in accordance with claim 1 in which the discharge duct (13) is composed of at least two parts, characterized by the upper part of the discharge duct having an opening (47b) which can be closed off by a cover (20) and through which an insert plate (17) can be inserted when required that closes off the lower inlet opening of the discharge duct (13) to cause the material thrown out by the flail mower (12) to be discharged downwards to the rear by the blowout hood (18).

3. An appliance in accordance with claims 1 and 2, characterized by the front wall (13a) of the discharge duct (13) having an opening (47a) and by the rear wall (13b) or the cover (20) having an opening (47b) through which there runs a universal shaft (49) that is connected with the gearbox (6) and with the input shaft (48) of the rotary hoe (36).

4. An appliance in accordance with claims 1 to 3, characterized by the leg (30) being so secured in the retaining pocket (29) as to be free to move and being adjustable to various depths by means of a threaded spindle (50) that is carried in bearings (51) so as to be rotatable and that engages in a threaded block (52) on the leg (30).

5. An appliance in accordance with claims 1 to 4, characterized by the coupling flange (21) being secured rigidly but so as to be capable of removal by means of bolts (22) to a counter plate (23) on which ribs (24) are provided that engage with pins (25) and/or sockets (26) provided on the lengthwise-running plates (27) and by the lengthwise-running plates (27) being connected to clamps (28a, 28b) that can be clamped over the tubular support (46) of the loosening elements (31).

6. An appliance in accordance with claims 1 to 5, characterized by the fixed clamp half (28b) being provided with at least one retaining pocket (29) for the leg (30) of the outermost loosening element (31).

**Revendications**

1. Dispositif pour tracteurs pour l'agriculture, afin d'ameublir de la terre arable et avantageusement couverte de plantes vivantes ou mortes ou de résidus des récoltes, avec une faucheuse à fléaux (12) motorisée et disposée sous une hotte, au moins une rangée de corps d'ameublissement (31) qui est disposée derrière elle et, derrière celle-ci, des outils de travail motorisés pour émietter la terre ameublie, où la hotte de la faucheuse à fléaux (12), soit se termine en étant dirigée de façon oblique vers l'arrière, devant le côté avant du tube porteur des corps d'ameublissement, soit s'étend au dessus des corps d'ameublissement et des outils rotatifs disposés derrière pour émietter la terre, et la faucheuse à fléaux est disposée sur un cadre de support (1) ouvert vers l'arrière, qui se compose d'au moins une poutre transversale (2) à la direction d'avance et d'au moins deux poutres longitudinales (3) dans la direction d'avance, caractérisé en ce que le cadre porteur (1) est ouvert vers l'arrière, les poutres longitudinales (3) portent, à leur extrémité libre, une pièce d'accouplement (45) qui est reliée de façon à pouvoir facilement être détachée, à une contre-pièce (23, 27, 28a) fixée sur le tube porteur (46) des corps d'ameublissement, et les corps d'ameublissement (31) sont fixés sur le tube porteur (46).

2. Dispositif selon la revendication 1 dans lequel le canal d'évacuation se compose d'au moins deux parties, caractérisé en ce que la partie supérieure du canal d'évacuation présente une ouverture (46b) pouvant être fermée par un volet (20) où peut être insérée, à volonté, une tôle (17), qui ferme l'ouverture inférieure d'entrée du canal d'évacuation (13) et qui rejette la matière ramassée par la faucheuse à fléaux (12) par la hotte d'évacuation (18), vers l'arrière.

3. Dispositif selon l'une quelconque des revendications 1 ou 2 caractérisé en ce que la paroi avant (13a) du canal d'évacuation (13) présente une ouverture (47a) et la paroi arrière (13b) ou le volet (20) présente une ouverture (46b), par où passe un arbre articulé (49) reliant l'entraînement (6) à l'arbre d'entrée (48) de la herse rotative (36).

4. Dispositif selon l'une quelconque des revendications précédentes caractérisé en ce que la tige de retenue (30) est disposée coulissante dans la poche de retenue (29) et elle peut être réglée, par une broche filetée (50) qui est disposée rotative dans des coussinets (51), et guidée dans un bloc fileté (52) sur la tige d'arrêt (30), à différentes hauteurs.

5. Dispositif selon l'une quelconque des revendications précédentes caractérisé en ce que la bride d'accouplement (21) est reliée de façon rigide et détachable, par des vis (22), à une contre-plaque (23), où sont formées des nervures (24), qui reçoivent des boulons (25) et/ou fiches (26) formés sur des plaques longitudinales (27) et en ce que les plaques longitudinales (27) sont reliées par des colliers de tuyau (28a, 28b), qui peuvent être fixés sur le tube porteur (46) du corps (31) d'ameublissement.

6. Dispositif selon l'une quelconque des revendications précédentes caractérisé en ce que sur la partie fixe du collier de tuyau (28b) est prévue au moins une poche de retenue (29) de la tige de retenue (30) du corps d'ameublissement extérieur (31).

Fig 1

# Fig 2

# Fig 3

# Fig 4